# EUROPEAN PATENT SPECIFICATION

(11) **EP 2 123 544 B1**
(45) Date of publication and mention of the grant of the patent: **25.04.2012**
(21) Application number: 08721498.7
(22) Date of filing: 06.03.2008
(51) Int. Cl.: B62D 55/253

(54) **RUBBER TRACK**
GUMMIRAUPENKETTE
CHENILLE EN CAOUTCHOUC

(30) Priority: 06.03.2007 JP 2007055665; 18.04.2007 JP 2007108990
(43) Date of publication of application: 25.11.2009
(73) Proprietor: Bridgestone Corporation, Tokyo 104-8340 (JP)
(72) Inventor: SHIMOZONO, Nobuo, Tokyo 104-8340 (JP)
(74) Representative: Oxley, Robin John George
(86) International application number: PCT/JP2008/054078
(87) International publication number: WO 2008/108439

(56) References cited:
- EP-A- 0 515 683
- EP-A- 0 895 924
- JP-A- 06 329 057
- JP-A- 2002 308 163
- JP-A- 2003 252 259
- JP-A- 2006 069 416
- JP-A- 2007 038 908
- JP-U- 49 020 229
- US-A1- 2004 066 090

## Description

### Technical Field

The invention relates to a rubber track (rubber crawler), and more particularly to an endless rubber track having protruding lugs (convex lugs) disposed around an outer peripheral surface and convex guide juts disposed around an inner peripheral surface.

### Background Art

A rubber track usually has such a structure that a strength member such as steel cords and the like is embedded therein in an endless longitudinal direction, protruding lugs are formed around an outer peripheral surface, and convex guide juts are also formed around an inner peripheral surface so that the rubber track is in contact with a travel surface such as a ground surface and the like (refer to, for example, Patent Document 1).

When the rubber track described above is trained around a sprocket and the like, since the guide juts on the inner peripheral surface side are more rigid than flat portions in the vicinities of the guide juts, strain on an outer peripheral side is increased in projection regions corresponding to the portions between the guide juts. In contrast, since the projection regions corresponding to the guide juts have high rigidity, they have approximately flat surfaces.

Accordingly, when a lug on the outer peripheral side occupies the projection region of two guide juts, strain is also increased at the tip of the lug, that is, in the outermost peripheral portion thereof. As a result, there is a possibility that a crack may be generated in the vicinities of the roots of the lugs due to a bending fatigue caused by the rubber track being trained around the sprocket and the like repeatedly.

Further, when the rubber track is trained around the sprocket and the like when the tip end of a lug is located outside of the projection region of a guide jut, since a curvature of the lug is more increased than in a case in which the tip end of the lug is located in the projection region of the guide jut, there is a larger possibility that a crack will be generated.

Patent Document 1: Japanese Patent Application Laid-Open Publication No. 2000-177568
Patent Document 2: Japanese Patent Application Laid-Open Publication No. 2004-268655. JP2002-308163, JP2006-69416, JP6-329057, JP2003-252259, JP-U-020229/1974 and JP2007-038908, and US2004/0066090 are referred to, which last discloses a known crawler track in accordance with the preamble features of independent claim 1

### Disclosure of the Invention

### Problems to be Solved by the Invention

An object of the invention is to provide a rubber track in which a crack is unlikely to be generated in an outer peripheral surface in view of the above facts. Means for Solving the Problems

A rubber track of a first aspect of the invention has an endless rubber elastic member having protruding lugs formed around an outer peripheral surface in a peripheral direction in two rows of a first row and a second row at equal pitches, and protruding guide juts disposed around an inner peripheral surface at equal intervals, wherein the respective lugs of the two rows are disposed on different sides of a center in a width direction of the rubber track, a lug of the first row and a lug of the second row are respectively superposed on a guide jut when viewed from a direction orthogonal to the outer peripheral surface, and tip end portions of the lug of the first row and of the lug of the second row on the center in the width direction of the rubber track are respectively superposed on only one guide jut when viewed from the direction orthogonal to the outer peripheral surface.

In the rubber track of the first aspect of the invention, end portions of the lug of the first row and of the lug of the second row on the center (center side) in the width direction of the rubber track may be respectively superposed on only one guide jut when viewed from the direction orthogonal to the outer peripheral surface.

In the above arrangement since the bending resistance of the rubber train is reduced, when the rubber track is trained around a sprocket and the like, there may be provided a rubber track in which loss of a drive force may be reduced.

In the rubber track of the first aspect of the invention, the lugs of the first row and the lugs of the second row may be offset by a half pitch from each other

In the above arrangement, there may be provided a rubber track having a small amount of vibration by disposing the lugs zigzag.

In the rubber track of the first aspect of the invention, end portions of the lug of the first row and of the lug of the second row in a longitudinal direction, which are ends at the center (center side) in the width direction of the rubber track, may be superposed on a common guide jut when viewed from the direction orthogonal to the outer peripheral surface.

In the above arrangement, since concentration of strain in the vicinities of ends of the lugs at a center in the width direction of the rubber track may be prevented, occurrence of a crack may be prevented.

In the rubber track of the first aspect of the invention, the lugs and the guide juts may be disposed at equal pitches.

In the above arrangement, when rubber is injected to form the lugs and the guide juts, there may be provided a rubber track having a smaller amount of strain by preventing a waving phenomenon of a laminated portion.

In the rubber track of the first aspect of the invention, the lugs may have a first shape, or a second shape in which the length of the lug in the width direction of the rubber track is shorter than that of the first shape, and lugs having the first shape and lugs having the second shape are disposed alternately in a peripheral direction. With this arrangement, mud attached to the lugs may be easily eliminated and a driving force of the rubber track may be increased. This is because, in lugs which are short in the width direction, since lug bottoms on the outside of the lugs are widened, the portions act as start points from which the mud drops.

In the arrangement of the rubber track, outside portions in the width direction of the lugs of the first shape may be chamfered obliquely with respect to the peripheral direction. An impact of the lugs with respect to a road surface may be reduced by obliquely chamfering the vicinities of the outside end portions in the width direction of the lugs of the first shape with respect to the peripheral direction. As a result, since roots of crops and the like may be prevented from being damaged, crop yields may be increased.

### Effects of the Invention

Since the invention is arranged as described above, there may be provided a rubber track which inhibits the generation of cracks on an outer peripheral surface.

### Brief Description of the Drawings

Fig. 1 is a perspective view showing a rubber track according to the invention.
Fig. 2A is a plan view showing a rubber track according to a first exemplary embodiment of the invention.
Fig. 2B is a side elevational view showing the rubber track according to the first exemplary embodiment of the invention.
Fig. 3A is a plan view showing a rubber track according to a second exemplary embodiment of the invention.
Fig. 3B is a plan view showing the rubber track according to the second exemplary embodiment of the invention.
Fig. 4 is a plan view showing a conventional rubber track.
Fig. 5 is a plan view showing a conventional rubber track.
Fig. 6A is a side elevational view showing a rubber track according to a third exemplary embodiment of the invention.
Fig. 6B is a side elevational view showing a conventional rubber track in comparison to the rubber track according to the third exemplary embodiment of the invention.
Fig. 7A is a side elevational view showing a state of stress when the rubber track according to the third exemplary embodiment of the invention is trained around a sprocket and the like.
Fig. 7B is a side elevational view showing a state of stress when the conventional rubber track is trained around sprocket and the like.
Fig. 8 is a plan view showing a modification of the rubber track according to the second exemplary embodiment of the invention.
Fig. 9 is a plan view showing a modification of the rubber track according to the first exemplary embodiment of the invention.

### Best Mode for Carrying Out the Invention

<First Exemplary Embodiment>

The invention will be explained below in more detail referring to exemplary embodiments.

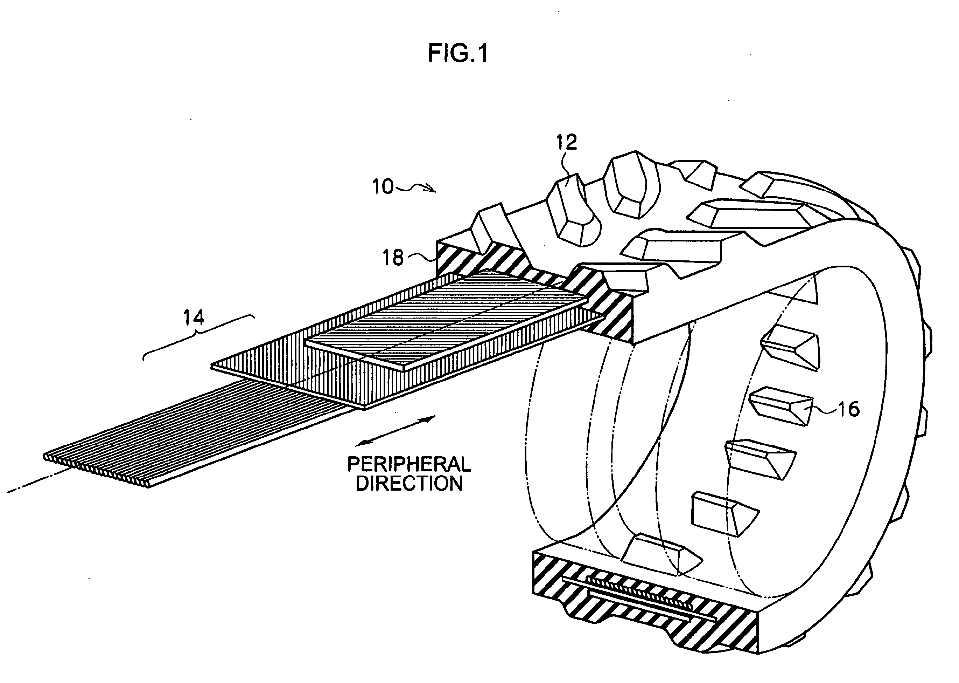

Fig. 1 shows a rubber track according to a first exemplary embodiment of the invention. Fig. 1 is a perspective view showing the rubber track of the exemplary embodiment.

As shown in Fig. 1, a coreless rubber track 10 having no core metal is integrally formed as an endless belt-like rubber track 10 in which steel cords 14 as a tensile member that is trained in a peripheral direction is covered with a rubber 18.

The rubber track 10 has protruding lugs 12, which form a contact area around an outer peripheral side, are regularly disposed in a peripheral direction, and as the rubber track 10 is driven, the lugs 12 catch a road surface and move an apparatus main body.

Convex guide juts 16 are regularly disposed around an inner peripheral side of the rubber track 10. The rubber track 10 is trained around a sprocket (not shown) disposed on an apparatus main body side, the guide juts 16 are engaged with driving recesses disposed on the surface of the sprocket, and a drive force is transmitted from the sprocket being rotated to the rubber track 10 so that the rubber track 10 is driven.

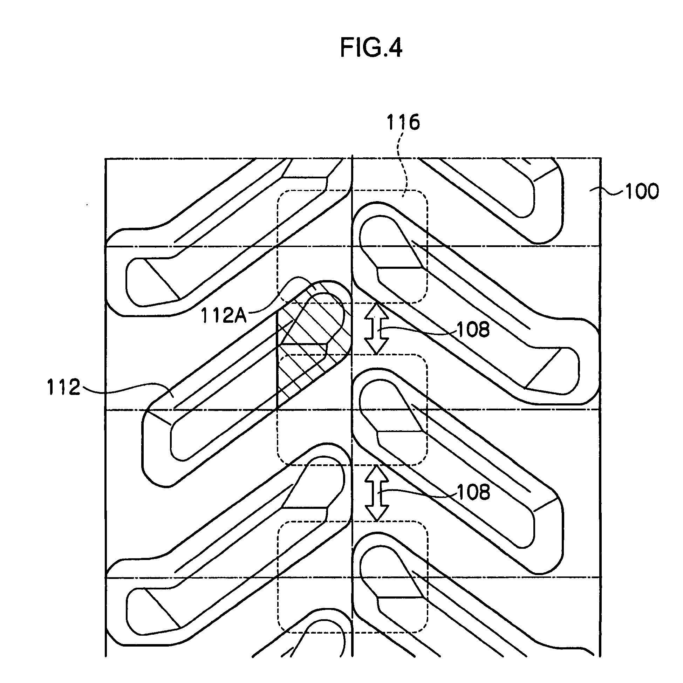

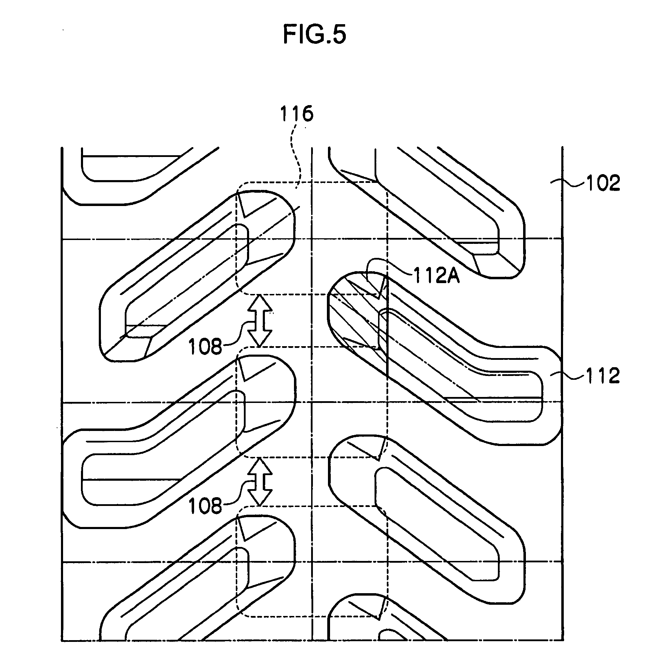

Conventionally, in an arrangement of lugs in a rubber track 100 having guide juts 116 around an inner peripheral surface thereof, the projection regions of the guide juts 116 (an outer peripheral surface corresponding to the guide juts 116), as shown in Figs. 4 and 5, as well as the lugs 112, have a higher rigidity than that of the other portions, and are not easily bent when they are trained around a sprocket and the like, and as a result, strain is naturally concentrated on the other portions, i.e. portions shown by a white arrow 108 and the like, and thus there is a possibility that a crack may be generated on the outer peripheral surface.

When a single lug 112 is superposed on a plurality of guide juts 116 as shown by shaded areas in the figures at the time a guide jut 116 is superposed on an edge 112A of a lug 112 on the center (center side) in the width direction thereof, strain is caused on the lugs 112 themselves between projection regions of the guide juts 116 having high rigidity and the other portions other, and thus there is a possibility that a crack is generated.

Disposition of the lugs of the rubber track according to the exemplary embodiment of the invention will be explained below.

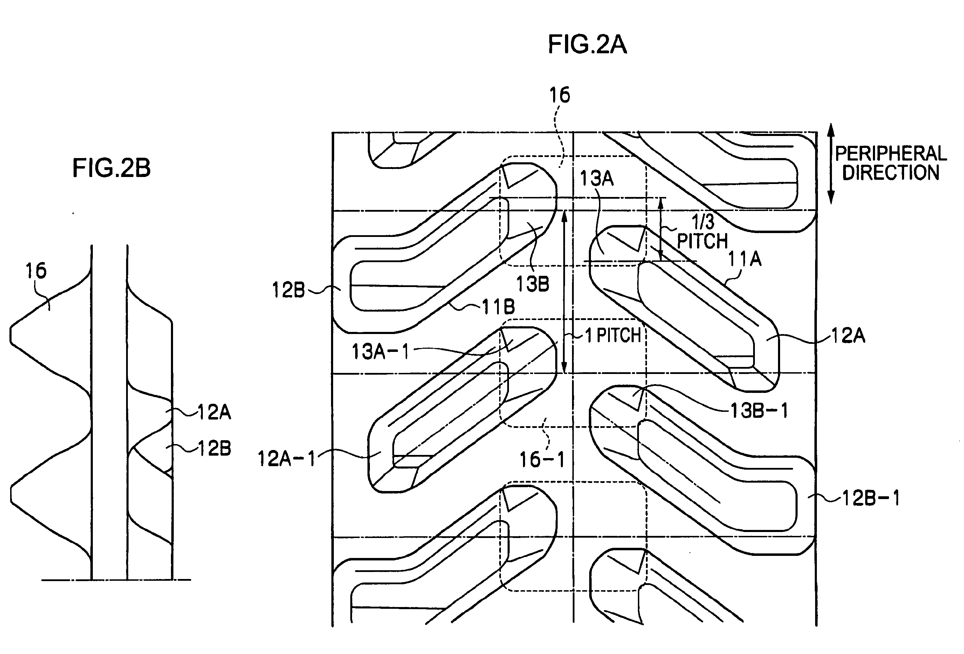

Figs. 2A and 2B show a lug shape of the rubber track according to the first exemplary embodiment of the invention. Fig. 2A shows a plan view of the rubber track 10 when it is viewed from the outer peripheral surface, and Fig. 2B shows a side elevational view of the rubber track 10 when it is viewed from a width direction.

As shown in Fig. 2A, in the rubber track 10 according to the first exemplary embodiment of the invention, lugs 12A, which are short in the width direction, and lugs 12B, which are longer than the lugs 12A in the width direction, are alternately disposed in the peripheral direction.

In this case, end portions 13A, 13B of the lugs 12A, 12B on the center (center side) in the width direction are superposed on the projection regions (dashed-line portions in the figure) of the guide juts 16. Since the end portions 13A, 13B are superposed on the projection regions of the guide juts 16 having the high rigidity, they are less bent than the other portions when they are trained around the sprocket and the like and thus strain does not concentrate only on the end portions 13A, 13B. With this arrangement, occurrence of a crack in the end portions 13A, 13B of the lugs 12A, 12B may be prevented.

Since each lug 12A or 12B is superposed on only one guide jut 16, the portions other than the end portions 13A, 13B, i.e., the lugs 12A, 12B including side end portions 11A, 11B in the longitudinal direction, are not superposed on a plurality of the guide juts 16. With this arrangement, occurrence of a crack in the side end portions 11A, 11B and in their vicinities due to the strain caused when the side end portions 11 A, 11B are superposed on the guide juts 16 may be prevented.

In addition, the end portions 13A-1 and 13B-1 at the center (center side) in the width direction of the lugs 12A and 12B which are disposed in two rows are disposed at the positions where they are superposed on the same guide jut 16-1 (at the center in the figure). With this arrangement, the portions having high rigidity and the portions having low rigidity may be disposed at approximately equal intervals in the peripheral direction of the rubber track 10. As a result, since a bending resistance caused when the rubber track 10 is trained around the sprocket and the like is reduced, a power loss may be suppressed when the rubber track 10 is driven by reducing the drive torque of the rubber track 10.

The lugs 12, which are disposed in the two rows in the peripheral direction with respect to the center in the width direction, need not be disposed in lateral symmetry, and may be disposed in zigzag, that is, the so-called pitches thereof may be offset (although the rows are offset by 1/3 of a pitch in Fig. 2A, they are not of course limited thereto, and the lugs 12 may also be disposed to be offset by 1/2 of a pitch (half pitch). With this disposition, a blank portion between a lug 12 and a next lug 12 disposed in one row is covered by a lug 12 in the other row in the above structure, and therefore, a vibration which is periodically generated due to the blank portion, may be suppressed.

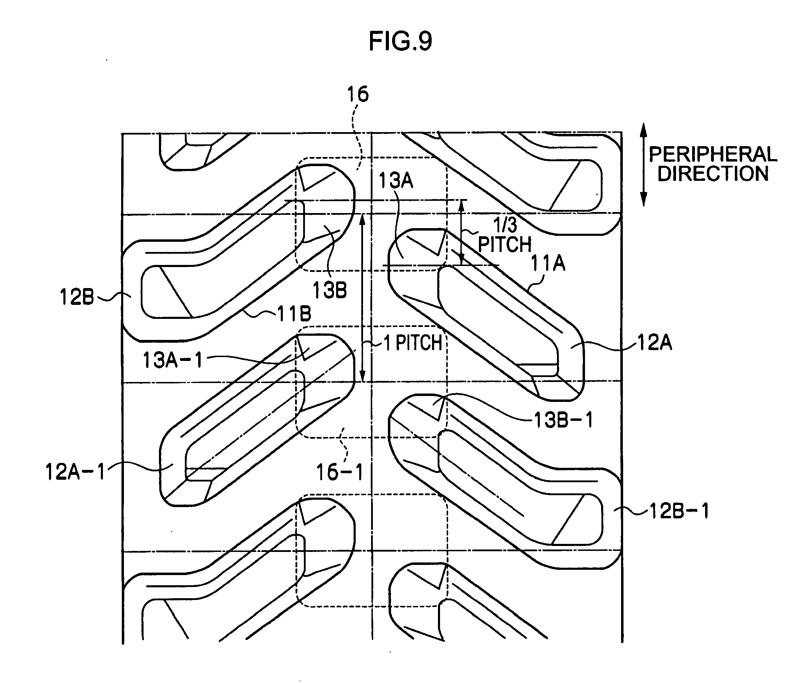

In addition, since portions near to the outer end portions in the width direction of lugs 12B and 12B-1 (which are long in the width direction) are obliquely chamfered with respect to the peripheral direction as shown in Fig. 9, the impact of the lugs on a road surface may be reduced. Damages on roots of crops and the like may be prevented by the above arrangement.

<Second Exemplary Embodiment>

Disposition of lugs of a rubber track according to another exemplary embodiment of the invention will be explained below.

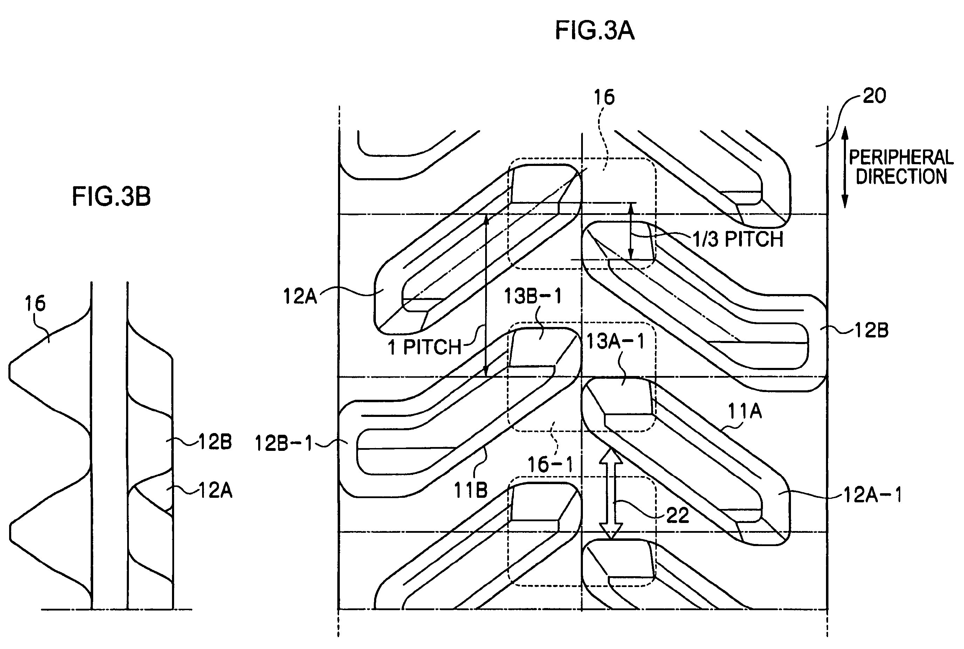

Figs. 3A and 3B show a lug shape of a rubber track according to a second exemplary embodiment of the invention. Fig. 3A shows a plan view of the rubber track 20 when it is viewed from an outer peripheral surface, and Fig. 3B shows a side elevational view of the rubber track 20 when it is viewed from a width direction.

As shown in Fig. 3A, in the rubber track 20 according to the second exemplary embodiment of the invention, lugs 12A, which are short in the width direction, and lugs 12B, which are longer than the lugs 12A in the width direction, are alternately disposed in a peripheral direction.

End portions 13A, 13B on a center (center side) in the width direction of the lugs 12A, 12B are superposed on the projection regions (dashed-line portions in the figure) of guide juts 16. Since the end portions 13A, 13B are superposed on the projection regions of the guide juts 16 having high rigidity, they are less bent than the other portions when they are trained around a sprocket and the like and thus strain does not concentrate on the end portions 13A, 13B. With this arrangement, occurrence of a crack in the end portions 13A and 13B of the lugs 12A and 12B may be prevented similar to the first exemplary embodiment.

In addition, as in the first exemplary embodiment, one lug 12A or 12B is superposed on only one guide jut 16, the portions other than the end portions 13A and 13B are not superposed on a plurality of the guide juts 16, that is side end portions 11 A, 11B in a longitudinal direction are not superposed thereon, end portions 13A-1 and 13B-1 at a center in the width direction of the lugs 12A and 12B, which are disposed in two rows, are disposed at positions where they are superposed on the same guide jut 16-1 (at the center in the figure), and the lugs 12 disposed in two rows in the peripheral direction with respect to the center in the width direction are not disposed with lateral symmetry, and are disposed in a zigzag manner such that the lugs in the two rows are offset by 1/3 of a pitch similar to the first exemplary embodiment. Note that although the lugs are offset by 1/3 of a pitch in Fig. 3A, they are not limited thereto, and may also be disposed such that they are offset by 1/2 of a pitch (a half pitch).

In the exemplary embodiment, one end in the peripheral direction of the end portions 13A and 13B at the center in the width direction of the lugs 12A and 12B is shortened to increase a distance (shown by a white arrow 22 in the figure) in the peripheral direction of the end portions 13A and 13B at the center in the width direction of the lugs 12A and 12B. With this arrangement, mud is less likely to stay in the vicinity of the center in the width direction of the rubber track 20, and thus the rubber track 20 is excellent in a mud elimination property.

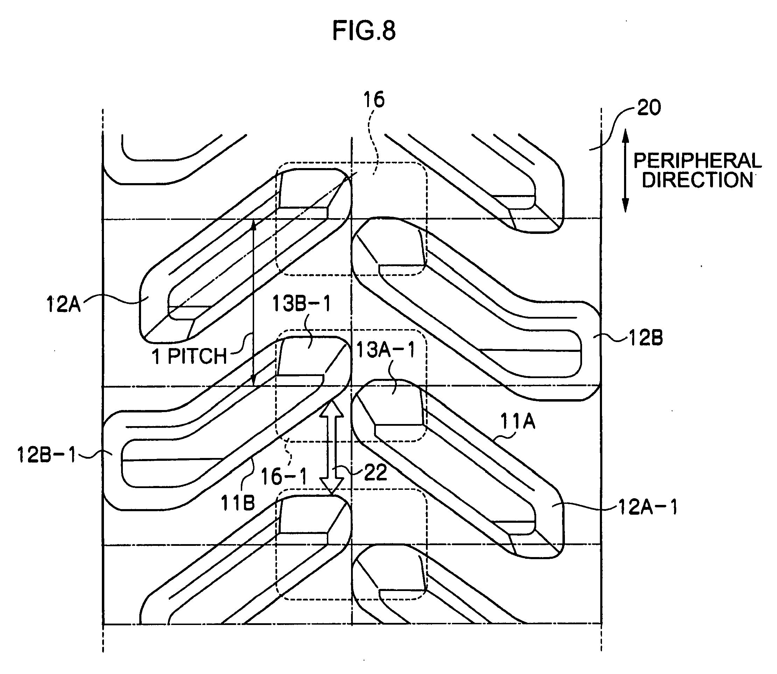

Note that, in the exemplary embodiment shown in Fig. 3A, although the one ends (13A-1, 13B-1) of both the end portions 13A, 13B on the center (center side) in the width direction of the lugs 12A, 12B are shortened in the peripheral direction, the lugs in only one of the rows may be cut as shown in Fig. 8.

Further, in the exemplary embodiment, although the one ends of both the end portions 13A, 13B on the center (center side) in the width direction of the lugs 12A, 12B are shortened in the peripheral direction to increase the distance in the peripheral direction, the same effect may be also obtained by chamfering the end portions 13A, 13B on the center (center side) in the width direction of the lugs 12A, 12B.

<Third Exemplary Embodiment>

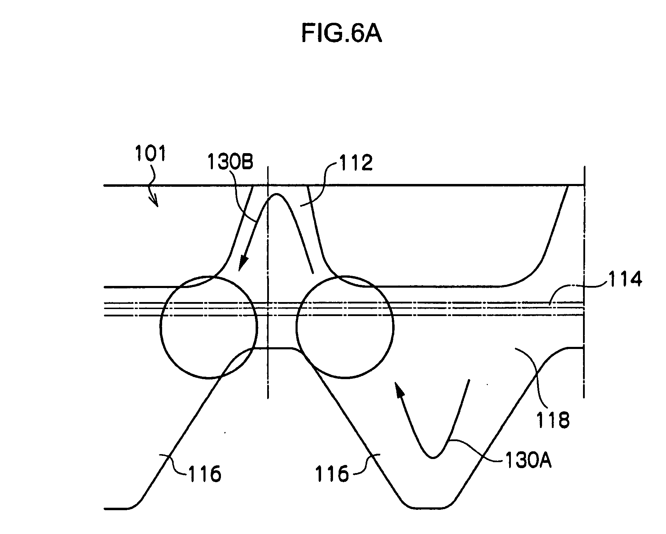

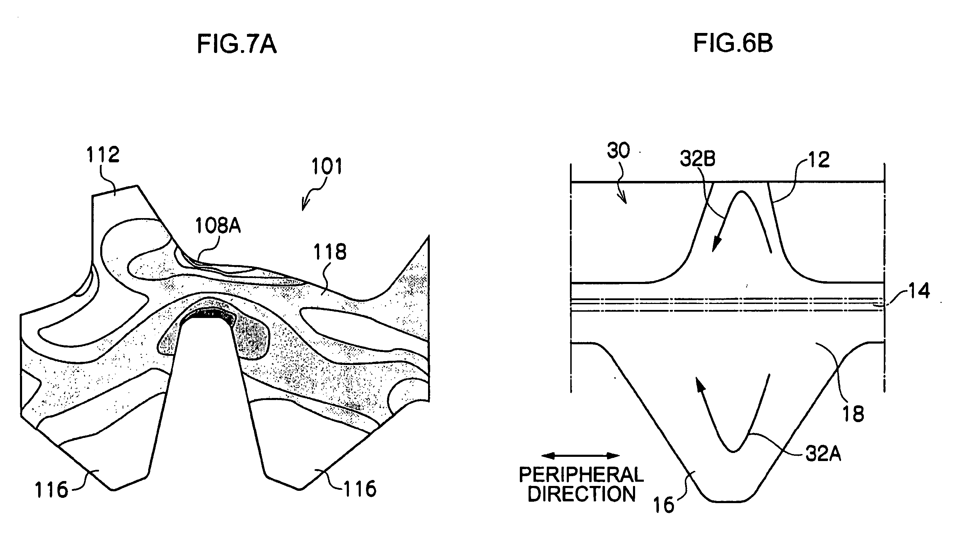

Figs. 6A and 6B show the positional relation between lugs and guide juts of a conventional rubber track and those of a rubber track according to a third exemplary embodiment of the invention.

Fig. 6A shows a side elevational view of the conventional rubber track 101, and Fig. 6B shows a side elevational view of the rubber track 20 of the exemplary embodiment.

Conventionally, when the rubber track including lugs 112 and guide juts 116 is formed from rubber, a waving phenomenon may occur due to the injection pressure of the rubber 118 acting on steel cords 114 at the time of injection.

In the formation of the lugs 112 and the guide juts 116 from the rubber 118 when the lugs 112 and the guide juts 116 are to be offset in a peripheral direction, as shown in Fig. 6A, the flow of the rubber 118 generated due to the expansion thereof at a time of vulcanization is indicated by arrows 130A and 130B, and the waving phenomenon is liable to be caused since the rubber 118 flows in a direction that causes waving in the steel cords 114.

In addition, there is a tendency that the waving phenomenon is concentrated on narrow gap ranges (within circles in the figure) in the portions where lugs 112 are superposed on a guide jut 116, and thus there is a possibility that when the rubber track is trained around the sprocket and the like, strain of the rubber 18 is liable to be concentrated on the aforementioned portions and a crack may be generated.

That is, when a conventional rubber track is trained around a sprocket and the like as shown in Fig. 7A, since strain is concentrated on the narrow ranges (108A in the figure) of the outer peripheral surface of the rubber track 101, a crack is liable to be generated in these portions.

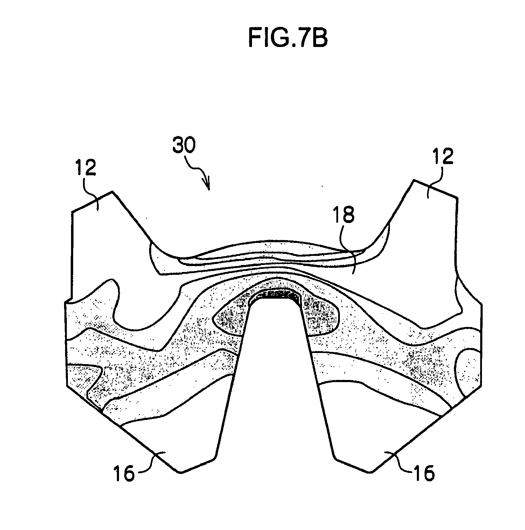

In contrast, as shown in Fig. 6B, when a lug 12 approximately correspond to a guide jut 16 at the apexes thereof in the peripheral direction, the flows 32A and 32B of the rubber 18 due to its expansion when it is vulcanized is directed in the peripheral direction without pressing the steel cords 14 in a specific direction. As a result, as shown in Fig. 7B, since the strain of the rubber 18 is not concentrated on one portion, a crack is unlikely to be generated in the outer peripheral surface of the rubber track 30.

### Industrial Applicability

The invention may be applied to an endless rubber track having protruding lugs disposed around an outer peripheral surface and convex guide juts disposed around an inner peripheral surface and may be widely applied to a traveling apparatus using the rubber track.

### Reference Numerals

- 10: rubber track
- 12: lug
- 13: end portion
- 14: steel cord
- 16: guide jut
- 18: rubber
- 20: rubber track
- 30: rubber track

## Claims

1. A rubber track (10, 20, 30) comprising an endless rubber elastic member having protruding lugs (12A, 12B, 112) formed around an outer peripheral surface in a peripheral direction in two rows of a first row and a second row at equal pitches, and protruding guide juts (16, 116) disposed around an inner peripheral surface at equal intervals, wherein
the respective lugs (12A, 12B, 112) of the two rows are disposed on different sides of a center in a width direction of the rubber track (10, 20, 30),
a lug (12A, 112) of the first row and a lug (12B, 112) of the second row are respectively superposed on a guide jut (16, 116) when viewed from a direction orthogonal to the outer peripheral surface, and **characterised in that**
tip end portions (13A, 13B) of the lug of the first row and of the lug of the second row on the center in the width direction of the rubber track (10, 20, 30) are respectively superposed on only one guide jut (16, 116) when viewed from the direction orthogonal to the outer peripheral surface.

2. The rubber track of claim 1, wherein end portions (13A, 13B) of the lug (12A, 112) of the first row and of the lug (12B, 112) of the second row on the center in the width direction of the rubber track (10, 20, 30) are respectively superposed on only one guide jut (16, 116) when viewed from the direction orthogonal to the outer peripheral surface.

3. The rubber track of claim 1 or 2, wherein the lugs (12A, 112) of the first row and the lugs (12B, 112) of the second row are offset by a half pitch from each other.

4. The rubber track of any one of claims 1 to 3, wherein end portions of the lug (12A, 112) of the first row and of the lug (12B, 112) of the second row in a longitudinal direction, which are,ends at the center in the width direction of the rubber track (10, 20, 30), are superposed on a common guide jut (16, 116) when viewed from the direction orthogonal to the outer peripheral surface.

5. The rubber track of any one of claims 1 to 4, wherein the lugs (12A, 12B, 112) and the guide juts (16, 116) are disposed at equal pitches.

6. The rubber track of any one of claims 1 to 5, wherein the lugs (12A, 12B, 112) have a first shape, or a second shape in which the length of the lug (12A, 12B, 112) in the width direction of the rubber track (10, 20, 30) is shorter than that of the first shape, and lugs (12A, 12B, 112) having the first shape and lugs (12A, 12B, 112) having the second shape are disposed alternately in a peripheral direction.

7. The rubber track of claim 6, wherein outside portions in the width direction of the lugs (12A, 12B, 112) of the first shape are chamfered obliquely with respect to the peripheral direction.

## Patentansprüche

1. Eine Gummiraupenkette (10, 20, 30), umfassend ein endloses gummielastisches Bauteil mit hervorstehenden Ansätzen (12A, 12B, 112), die um eine äußere Umfangsoberfläche in einer Umfangsrichtung in zwei Reihen aus einer ersten Reihe und einer zweiten Reihe mit gleichen Abständen gebildet sind, und hervorstehende Führungsvorsprünge (16, 116) umfassend, die um eine innere Umfangsoberfläche in gleichen Intervallen angeordnet sind,
wobei die entsprechenden Ansätze (12A, 12B, 112) der zwei Reihen auf verschiedenen Seiten eines Zentrums in einer Breitenrichtung der Gummiraupenkette (10, 20, 30) angeordnet sind, und
wobei sich ein Ansatz (12A, 112) der ersten Reihe und ein Ansatz (12B, 112) der zweiten Reihe jeweils auf einem Führungsvorsprung (16, 116) überlagern, bei Betrachtung aus einer zu der äußeren Umfangsoberfläche senkrechten Richtung, **dadurch gekennzeichnet, dass**
sich Spitzenendabschnitte (13A, 13B) des Ansatzes der ersten Reihe und des Ansatzes der zweiten Reihe in dem Zentrum in der Breitenrichtung der Gummiraupenkette (10, 20, 30) jeweils auf nur einem Führungsvorsprung (16, 116) überlagern, bei Betrachtung aus der zu der äußeren Umfangsoberfläche senkrechten Richtung.

2. Gummiraupenkette nach Anspruch 1, wobei Endabschnitte (13A, 13B) des Ansatzes (12A, 112) der ersten Reihe und des Ansatzes (12B, 112) der zweiten Reihe sich auf dem Zentrum der Breitenrichtung der Gummiraupenkette (10, 20, 30) jeweils auf nur einem Führungsvorsprung (16, 116) überlagern, bei Betrachtung aus der zu der äußeren Umfangsoberfläche senkrechten Richtung.

3. Gummiraupenkette nach Anspruch 1 oder 2, wobei die Ansätze (12A, 112) der ersten Reihe und die Ansätze (12B, 112) der zweiten Reihe um einen halben Abstand voneinander versetzt sind.

4. Gummiraupenkette nach irgendeinem der Ansprüche 1 bis 3, wobei die Endabschnitte des Ansatzes (12A, 112) der ersten Reihe und des Ansatzes (12B, 112) der zweiten Reihe in einer Längsrichtung, welche Enden an dem Zentrum in der Breitenrichtung der Gummiraupenkette (10, 20, 30) sind, sich auf einem gemeinsamen Führungsvorsprung (16, 116) überlagern, bei Betrachtung aus der zu der äußeren Umfangsoberfläche senkrechten Richtung.

5. Gummiraupenkette nach irgendeinem der Ansprüche 1 bis 4, wobei die Ansätze (12A, 12B, 112) und die Führungsvorsprünge (16, 116) mit gleichen Abständen angeordnet sind.

6. Gummiraupenkette nach irgendeinem der Ansprüche 1 bis 5, wobei die Ansätze (12A, 12B, 112) eine erste Form aufweisen, oder eine zweite Form, in welcher die Länge des Ansatzes (12A, 12B, 112) in der Breitenrichtung der Gummiraupenkette (10, 20, 30) kürzer als die der ersten Form ist, und die Ansätze (12A, 12B, 112) mit der ersten Form und die Ansätze (12A, 12B, 112) mit der zweiten Form abwechselnd in einer Umfangs-richtung angeordnet sind.

7. Gummiraupenkette nach Anspruch 6, wobei die Außenabschnitte in der Breitenrichtung der Ansätze (12A, 12B, 112) in der ersten Form schief angeschrägt mit Bezug zu der Umfangsrichtung sind.

## Revendications

1. Chenille en caoutchouc (10, 20, 30) comprenant un élément élastique en caoutchouc sans fin comportant des oreilles en saillie (12A, 12B, 112) formées, autour d'une surface périphérique externe dans une direction périphérique, en deux rangées comprenant une première rangée et une seconde rangée de pas égal, et des crêtes de guidage en saillie (16, 116) disposées autour d'une surface périphérique interne à des intervalles égaux,
les oreilles respectives (12A, 12B, 112) des deux rangées étant situées sur des côtés différents d'un centre dans le sens de la largeur de la chenille en caoutchouc (10, 20, 30),
une oreille (12A, 112) de la première rangée et une oreille (12B, 112) de la seconde rangée étant respectivement superposées à une crête de guidage (16, 116) lorsque vues depuis une direction perpendiculaire à la surface périphérique externe, et **caractérisée en ce que**
des parties d'extrémité de pointe (13A, 13B) de l'oreille de la première rangée et de l'oreille de la seconde rangée sur le centre dans le sens de la largeur de la chenille en caoutchouc (10, 20, 30) sont respectivement superposées à une seule crête de guidage (16, 116) lorsque vues depuis la direction perpendiculaire à la surface périphérique externe.

2. Chenille en caoutchouc selon la revendication 1, dans laquelle les parties d'extrémité (13A, 13B) de l'oreille (12A, 112) de la première rangée et de l'oreille (12B, 112) de la seconde rangée sur le centre dans le sens de la largeur de la chenille en caoutchouc (10, 20, 30) sont respectivement superposées à une seule crête de guidage (16, 116) lorsque vues depuis la direction perpendiculaire à la surface périphérique externe.

3. Chenille en caoutchouc selon la revendication 1 ou 2, dans laquelle les oreilles (12A, 112) de la première rangée et les oreilles (12B, 112) de la seconde rangée sont décalées les unes des autres de la moitié d'un pas.

4. Chenille en caoutchouc selon l'une quelconque des revendications 1 à 3, dans laquelle des parties d'extrémité de l'oreille (12A, 112) de la première rangée et de l'oreille (12B, 112) de la seconde rangée dans une direction longitudinale, qui sont des extrémités au centre dans le sens de la largeur de la chenille en caoutchouc (10, 20, 30), sont superposées à une crête de guidage commune (16, 116) lorsque vues depuis la direction perpendiculaire à la surface périphérique externe.

5. Chenille en caoutchouc selon l'une quelconque des revendications 1 à 4, dans laquelle les oreilles (12A, 12B, 112) et les crêtes en saillie (16, 116) sont disposées à des pas égaux.

6. Chenille en caoutchouc selon l'une quelconque des revendications 1 à 5, dans laquelle les oreilles (12A, 12B, 112) ont une première forme, ou une seconde forme dans laquelle la longueur de l'oreille (12A, 12B, 112) dans le sens de la largeur de la chenille en caoutchouc (10, 20, 30) est plus courte que celle de la première forme, et les oreilles (12A, 12B, 112) ayant la première forme, et les oreilles (12A, 12B, 112) ayant la seconde forme sont alternées dans une direction périphérique.

7. Chenille en caoutchouc selon la revendication 6, dans laquelle des parties extérieures dans le sens de la largeur des oreilles (12A, 12B, 112) de la première forme sont chanfreinées en oblique par rapport à la direction périphérique.
